# EUROPEAN PATENT APPLICATION

(11) **EP 4 534 994 A1**
(43) Date of publication of application: **09.04.2025**
(21) Application number: 22944719.8
(22) Date of filing: 02.06.2022
(51) Int. Cl.: G01N 27/72, G01B 7/02

(54) **METHOD AND SYSTEM FOR MEASURING LONGITUDINAL DISTANCE TO THE HARDENED AREA OF THE SURFACE OF A PART**

(71) Applicant: Asociacion Centro Tecnologico Ceit, 20018 San Sebastian (Gipuzkoa) (ES); LINQcase Industrial Solutions, S.L., 20018 San Sebastian (Gipuzkoa) (ES)
(72) Inventor: LASAOSA BEGUIRISTAIN, Aitor, 20018 San Sebastián (Gipuzkoa) (ES); RAMIREZ BECERRO, Maialen, 20018 San Sebastián (Gipuzkoa) (ES); GURRUCHAGA ECHEVERRIA, Kizkitza, 20018 San Sebastián (Gipuzkoa) (ES); ARTETXE QUEREJETA, Itsaso, 20018 San Sebastián (Gipuzkoa) (ES); MARTINEZ DE GUEREÑU ELORZA, Ane, 20018 San Sebastián (Gipuzkoa) (ES); IGLESIA NIETO, Angel, 20018 San Sebastián (Gipuzkoa) (ES)
(74) Representative: Cabinet Beau de Loménie
(86) International application number: PCT/ES2022/070340
(87) International publication number: WO 2023/233047

(57) **Abstract**

The present invention relates to a system and method for the non-destructive measurement of distance to the hardened area (Dh) where the end of a hardened area (1) of a part to be measured is located. Said invention comprises:
a) scanning a measurement area of a part by applying a variable magnetic field to the part and measuring an MBN signal by means of a sensor (3);
b) processing the MBN signal obtained;

and i) training a regression model by using reference parts, which comprises carrying out the previous steps a) and b) on reference parts with a known distance to the hardened area (Dh', Dh");
ii) measuring the part to be measured, which comprises carrying out the previous steps a) and b) on the part to be measured with an unknown distance to the hardened area (Dh); and
iii) calculating the distance to the hardened area (Dh) of the part to be measured.

## Description

### Technical field

The present invention belongs to the field of measurement methods, more specifically for the non-destructive measurement of distances, and relates to a method for measuring in parts the distance from a geometric reference point on the part to the start of a hardened area, specifically to identify when the start of said hardened area begins on the part, using Magnetic Barkhausen Noise (MBN) emission measurements, the part being, for instance, a crankshaft cylinder, for instance a crankshaft bearing or a crankshaft journal. The invention also relates to the measurement system to carry out the method of the invention.

### Prior art

In order to prevent wear and to extend their fatigue life, hardened areas are created on parts that come into contact with other moving parts during their service life, for instance, by means of surface hardening heat treatments. Hardened surface layers are usually generated by heat treatment techniques such as case hardening, induction hardening or laser hardening. These surface layers are usually microstructurally composed of an upper layer that is harder than the lower layer. For example, the surface layer may consist of a hard martensitic phase and a softer lower core, for instance ferrite-perlitic or bainitic phases.

However, in certain applications, this hardened surface is often not intended to cover the entire part and in many cases, there are very critical requirements as to which areas close to the hardened area should not be hardened. For example, crankshaft races often require a hardened surface coating. However, these races have recesses at their ends, called grooves, and in order to be able to work properly, these grooves must not be hardened. For this reason, it is vital in many applications to be able to establish quality control systems that allow the distance to where the hardened layer starts on the race (or distance from a geometric reference of the part to the point where the hardened layer starts) to be determined.

In order to measure the distance from the start of a hardened area (for instance martensite) in a part comprising hardened and non-hardened areas (for instance ferrite, pearlite or bainite), different destructive techniques such as microscopy, usually by cutting, polishing the face of interest and measuring the distance under a microscope after a chemical etching that darkens the non-hardened area, are used in the prior art. However, in addition to being destructive, these techniques are also slow and require prior preparation of the sample to be measured. In fact, the use of microscopy to measure the distance to where the hardened area begins usually requires preparation of the sample suitable for microscopic viewing, and the use of reagents that reveal/darken the microstructure of the sample prior to being observed, such as acid mixtures.

On the other hand, in the prior art there are also approaches that use the non-destructive technique known as magnetic Barkhausen (MBN) emission to measure different properties of hardened areas (for instance martensite), but none of them are used for the measurement of the distance from the start of the hardened surface layer in a sample comprising hardened and non-hardened areas. Examples of such different properties that are known to be measured in the prior art by means of MBN are the martensite volume fraction (Kleber, X. et al. "Ferrite-martensite steels characterization using magnetic Barkhausen noise measurements. ISIJ international, 44(6), pages 1033-1039), hardness and toughness (patent document US5458703A), or residual stresses of hardened areas in a crankshaft (patent document US10816414B2).

In summary, the characterisation of the distance from the start of a hardened area in parts comprising both hardened and non-hardened areas is complex. In fact, the applicant currently is not aware of any technique in the prior art capable of characterising this distance to the hardened area (Dh) in a non-destructive, quick manner and without requiring prior preparation of the hardened part to be measured. This distance Dh refers to a distance in the direction parallel to the surface of the part from which the hardened area begins.

### Object of the invention

The present invention aims to overcome the above limitations of the prior art by providing a quick, non-destructive method, without requiring prior preparation of the part to be measured, in order to calculate the distance at which a hardened area starts, or distance to the hardened area (Dh), by using magnetic Barkhausen noise (MBN) measurements. This methodology will allow the distance to the hardened area (Dh) to be identified and quantified.

The object of the present invention is therefore a method that allows, on a part to be measured comprising at least one hardened area, the distance from a geometric reference point of the part to the point where the hardened area begins, or distance to the hardened area (Dh) with respect to a non-hardened area or reference point, to be calculated quantitatively by means of non-destructive methods, using the amplitude of the first peak (P1) of the envelope of the magnetic Barkhausen (MBN) emission signal. The invention also relates to measurement devices to carry out said method.

This is achieved by scanning the area to be measured, i.e. by means of successive positioning of an MBN sensor at different positions along an area to be measured. For each position, a variable magnetic field is applied to the part and the signal from the MBN sensor is acquired at the same time.

Said measured MBN signal is then processed to obtain the amplitude of the peak of the non-hardened area (P1) of the MBN envelope, both for reference parts for which the distance to the hardened area (Dh', Dh") is known, and for parts to be measured for which the distance to the hardened area (Dh) is unknown and is to be calculated according to the method of the present invention. The initial measurement of the amplitude of the peak of the non-hardened area (P1', P1", etc.) for the reference parts thus allows an initial regression model to be trained in order to be able to subsequently calculate for the part to be measured the unknown distance to the hardened area (Dh) from the amplitude of the first peak (P1) obtained for the part to be measured.

The invention is therefore capable of quantifying the distance to the hardened area (Dh) of parts comprising at least one hardened area and other non-hardened areas by means of the magnetic Barkhausen (MBN) emission signal, a technique never before used for this purpose. This is because, a priori, there is no relationship between said MBN signal and said distance Dh, a relationship that can be established according to the method of the present invention. This is why the use of the MBN technique to calculate the distance to the hardened area Dh has not been considered hitherto, especially since the MBN signal does not provide any information directly related to said distance to the hardened area Dh.

The present invention relates to a method for the non-destructive measurement of the distance to the hardened area (Dh) where the end of a hardened area (1) of a part to be measured is located, said method comprising:
a) scanning a measurement area of a part by applying a variable magnetic field to the part and measuring an MBN signal at at least one measurement point (Ds) along the measurement area by means of a sensor (3);
b) processing the MBN signal obtained for each of the measurement points (Ds) determined to obtain the amplitude of the first peak (P1, P1', P1") of the MBN envelope;
such that it comprises:
i) training a regression model using reference parts, which comprises carrying out the previous steps a) and b) applied to a plurality of reference parts with a known distance to the hardened area (Dh', Dh") to obtain the amplitude of the first peak (P1', P1") for each of the measurement points (Ds); i.e., carrying out steps a) and b) for the reference parts and training the regression model with these obtained data;
ii) measuring the part to be measured, which comprises carrying out the previous steps a) and b) applied to the part to be measured with a hardened area at an unknown distance to the hardened area (Dh) to obtain the amplitude of the first peak (P1) for each of the measurement points (Ds); i.e., carrying out steps a) and b) for the part to be measured;
iii) calculating the distance to the hardened area (Dh) of the part to be measured by applying the trained regression model to the amplitude of the first peak of the part to be measured (P1).

A second aspect of the invention comprises the measurement area of the reference parts and of the part to be measured being a single measurement point (Ds).

A third aspect of the invention comprises using more than one sensor (3) to simultaneously measure one or more measurement areas on the same part (of the reference parts and/or of the part to be measured). In other words, it uses more than one sensor to simultaneously measure the same part.

A fourth aspect of the invention comprises the part to be measured being a crankshaft, for instance, a crankshaft cylinder such as crankshaft journals or bearings.

A fifth aspect of the invention relates to a measurement system to carry out the method of the invention, said system comprising:
- a magnetising element (5) to apply a variable magnetic field to the part;
- a sensor (3) to detect the resulting MBN signal on the surface of the part; and
- a processing unit to obtain the resulting MBN signal at the measurement point (Ds) where the sensor (3) is placed.

A sixth aspect of the invention relates to a measurement system further comprising positioning means for positioning the sensor (3) to allow it to be placed at different measurement points (Ds), to thus be able to scan along the measurement area of the part.

A seventh aspect of the invention relates to a measurement system further comprising means configured to ensure that the sensor (3) and/or the magnetising element (5) are positioned and maintained at a specific distance corresponding to the measurement point (Ds) where the sensor (3) picks up the MBN signal.

An eighth aspect of the invention relates to the measurement system comprising a plurality of magnetising elements (5) and/or sensors (3).

The aspects relating to the measurement system can be found in the measurement system alone or in combination with one another.

A method for the non-destructive measurement is defined as a method which does not require any additional stages for prior preparation of the part, and which furthermore does not change the characteristics of the part to be measured after carrying out the measurement.

The end of a hardened area of a part to be measured is understood to mean the interface between the hardened area and an adjacent non-hardened area, i.e. the geometric point where the hardened area begins.

The distance to the hardened area (Dh) is measured with respect to a geometric reference, for instance, located in the non-hardened area of the part adjacent to the hardened area.

A sensor or MBN sensor is understood to mean one or more sensors capable of detecting the Barkhausen magnetic emission signal (MBN signal or MBN envelope).

Measurement area is understood to mean the area comprising all the measurement points (Ds) on the surface of the sample to be measured, and measurement points (Ds) are understood to mean the geometric points of the part where the sensor measures the MBN signal.

Scanning the part, or scanning the measurement area, or scanning in the measurement area, is understood to mean the measurement of the MBN signal when the MBN sensor is located at different measurement points (Ds).

The MBN signal is a term that refers to the potential measured by the MBN sensor, namely the signal that shows the measured potential. The envelope of the Barkhausen signal (MBN), or MBN envelope, can be calculated according to any method known in the prior art, for instance, by means of a moving root mean square. It can be plotted on the y-axis in dependence of the acquisition time, the applied current, or the magnetic field measured with an additional magnetic field sensor on the x-axis. Such an MBN envelope may comprise a signal corresponding to the hardened area (for instance martensite) and/or a non-hardened area (for instance ferrite).

The first peak of the MBN envelope is understood to mean the voltage peak corresponding to the non-hardened area (for instance ferrite) which appears in magnetic fields (A/m) lower than the peak corresponding to the hardened area. The amplitude of the first peak (P1, P1', P1", etc.) is therefore understood to mean the maximum height of the voltage peak (maximum voltage) corresponding to the non-hardened phase (for instance ferrite), where P1 refers to the amplitude of the peak of the part to be measured, and (P1', P1", etc.) refers to the amplitude of said peak for different measurement points (Ds) of a reference part with an already known distance to the hardened area (Dh', Dh", etc.).

Thus, value P1 would refer to the amplitude of the first peak measured at the measurement point (Ds), or the vector of amplitude values of the first peak obtained for the part to be measured in dependence of the measurement distance or points (Ds) at which the measurements are carried out, and the values (P1', P1", etc.) to said value or vector of values for two or more reference parts.

Parts or samples with distance Dh are understood to mean any type of part comprising both a hardened surface and a non-hardened surface, for instance initially non-hardened parts which have been heat treated to form a hardened surface on them.

In the reference parts, the distance to the hardened area (Dh', Dh", etc.) is known, and they are used to train the regression model. Dh' and Dh" would therefore refer to the distance to the hardened area of the first and second reference parts, and so on respectively if there are more reference parts. The part to be measured will be the one with an unknown Dh, the calculation of which is the object of the present invention.

### Description of the figures

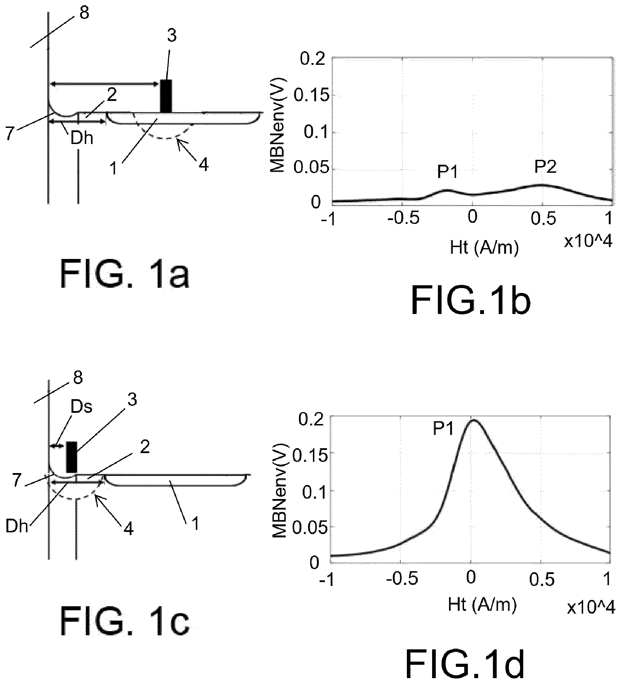

Figure 1 shows visually and schematically the positioning of a sensor (3) at a measurement point Ds located in a hardened area (1) of a part (Figure 1a), and the MBN envelope calculated from the measurement at the MBN sensor represented in dependence of the magnetic field at said measurement point Ds of the hardened area (1) in Figure 1a (Figure 1b); as well as the positioning of a sensor at a measurement point Ds located in a non-hardened area (2) where the sensing area (4) from where the MBN signal is received comprises only a non-hardened area 2 (Figure 1c) and the MBN envelope calculated from the measurement in the MBN sensor represented in dependence of the magnetic field at said measurement point Ds of the non-hardened area 2 (Figure 1d). The material in the non-hardened area (2) in this particular case of Figure 1 corresponds to ferrite and pearlite, while the material in the hardened area (1) corresponds to martensite. The MBN envelope represents the moving root mean square calculated from the potential measured by the MBN sensor (V, volts, on the y-axis) and can be plotted in dependence of the magnetic field measured with an additional magnetic field sensor (A/m, amperes per metre, for instance on the x-axis).

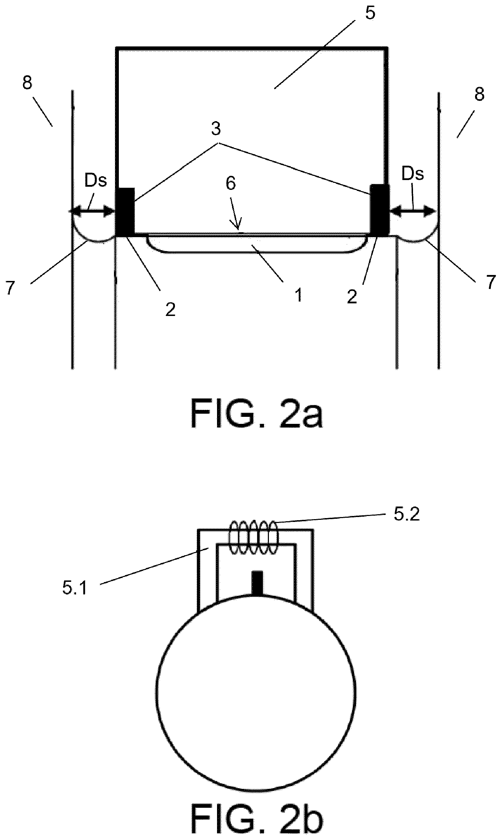

Figure 2 corresponds to a particular embodiment of the measurement system to carry out the method of the invention, in which an electromagnet (5) is positioned with two MBN sensors (3), located in the centre of the distance between poles of the electromagnet (5), which in turn are placed such that they comprise the entire hardened area (1) of the race (6) of a crankshaft (Figure 2a). The two sensors are positioned symmetrically with respect to the width of the electromagnet 5 (Figure 2a), so that both sensors (3) pick up MBN signal from both the hardened area (1) and the non-hardened area (2) for both interfaces of the hardened area with the adjacent non-hardened area comprising both part of the race (6) and the grooves (7) of the crankshaft, allowing both distances to the hardened area (Dh) to be measured at both interfaces. Figure 2b shows such an electromagnet (5 in Fig. 2a) comprising a ferromagnetic core (5.1) and an excitation coil (5.2).

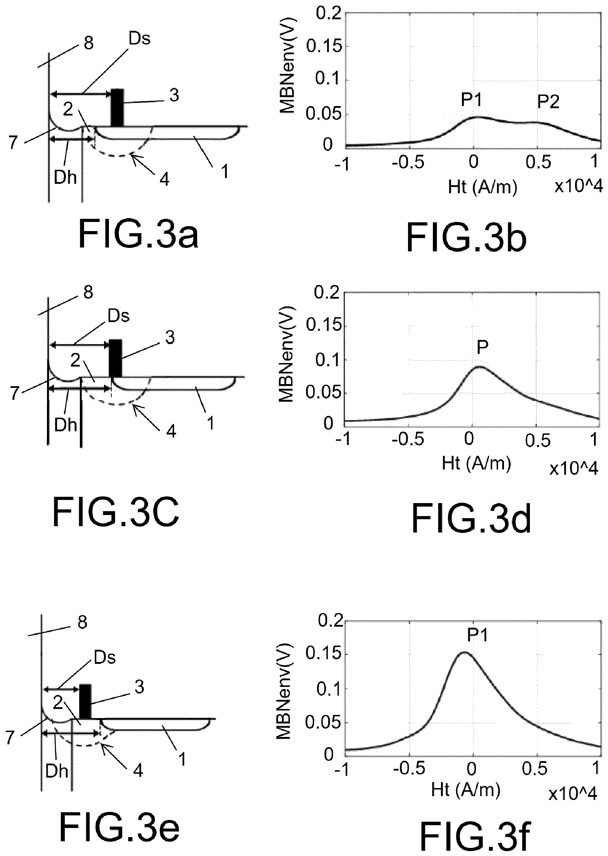

Figure 3 shows visually and schematically the positioning of a sensor at different measurement points (Ds) on the part to be measured such that the magnetic signal detected by the sensor or sensing area (4) comprises the interface between the hardened area and the adjacent non-hardened area (Figure 3a, 3c, 3e); as well as the MBN envelope calculated from the measurement in the sensor represented in dependence of the magnetic field at each of said measurement points Ds (Figure 3b, 3d, 3f). Figure 3 shows a scanning of measurement points as the sensor moves away from the hardened area (Figure 3a, 3c, 3e). The material in the non-hardened area (2) in this particular case of Figure 3 corresponds to ferrite and pearlite, while the material in the hardened area (1) corresponds to martensite. The MBN envelope represents the moving root mean square calculated from the potential measured by the MBN sensor (V, volts, on the y-axis) and can be plotted in dependence of the magnetic field measured with an additional magnetic field sensor (A/m, amperes per metre, for instance on the x-axis).

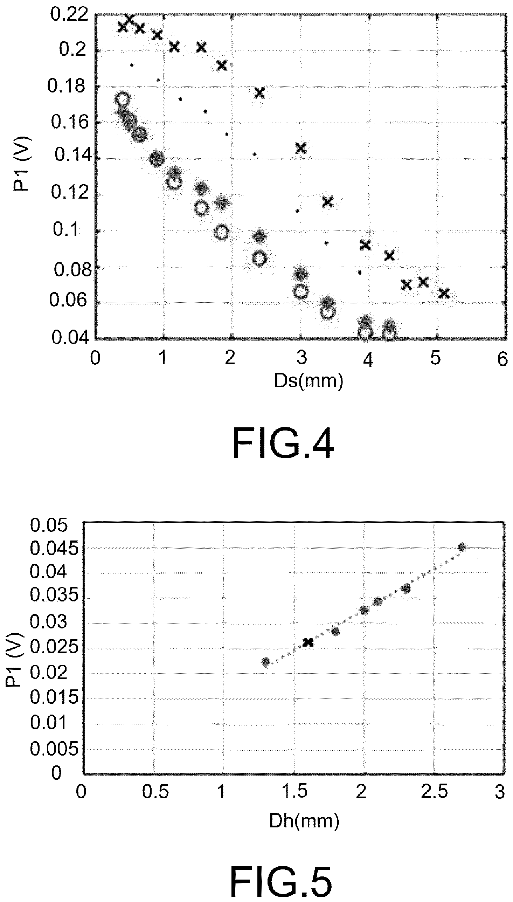

Figure 4 shows a graph with an example of data that can be used to carry out the stage of training the regression model in which for 3 reference parts with a known distance to the hardened area (Dh1 of reference part 1 represented by blank circles, Dh2 of reference part 2 represented by stars, Dh3 of reference part 3 represented by X), the amplitude of the first peak (P1', P1", P1‴) has been measured for different measurement points (Ds). The same measurement is carried out in the same way for a part to be measured of unknown Dh (represented by smaller, solid dots in Figure 4).
Figure 5 shows a graph with an example of the data that can be used to carry out the stage of training the regression model for reference parts similar to that of Figure 4, but where the measurement is carried out at a single constant measurement point (Ds) for all the reference parts with a known distance to the hardened area (Dh', Dh", etc.; on the x-axis), which is different for each reference part. At said single measurement point (Ds), the amplitude of the first peak (P1', P1", etc. on the y-axis) is measured for each sample of known (Dh', Dh", etc.). The same measurement is carried out in the same way for a part to be measured with an unknown Dh (part to be measured with the symbol X in Figure 5). Said measurement point (Ds) is such that the sensing area (4) encompasses both hardened and non-hardened areas. The symbol X represents the amplitude of the first peak (P1) obtained for a part to be measured with an initially unknown Dh.

### Detailed description of the invention

The object of the present invention is a method that allows, on a part to be measured comprising at least one hardened area (1), the distance from a geometric reference point of the part to the point where the hardened area begins, i.e. the distance to the hardened area (Dh), for instance with respect to a non-hardened area (2), to be calculated quantitatively by means of non-destructive methods, using the amplitude of the first peak (P1) of the envelope of the magnetic Barkhausen (MBN) emission signal of the part to be measured. The invention also relates to devices capable of carrying out said method.

The envelope of the MBN (Magnetic Barkhausen Noise) signal measured in a material in which two microstructural phases are present, for instance a non-hardened phase 2 (for instance ferrite) and a hardened phase 1 (for instance martensite), shows a two-peak behaviour (see for instance Figures 1a and 1b with peaks P1 and P2). The peak corresponding to the softer (non-hardened) material occurs at lower magnetic field levels, since the energy required for the magnetic domains of the material to move, and therefore for magnetic Barkhausen emission to occur, is lower. The peak corresponding to the harder (hardened) material, on the other hand, occurs at higher field levels.

The amplitude of each of the peaks of the MBN signal envelope is influenced by two main characteristics:
- The hardness of the phase: the softer the phase, the greater the amplitude.
- The volume of that phase in the sensing area (4) picked up by the sensor used: the greater the amplitude, the greater the volume of material in that phase.

When an MBN envelope sensor head is positioned at an area (1) that has been hardened over its entire surface (Figure 1a), the sensor picks up signal from a volume of material (sensing area 4) that has a small non-hardened area (2) that is far away in depth, so the amplitude and position of the predominant peak is that of peak P2 corresponding to the hardened phase (for instance martensite, see Fig. 1a and Fig. 1b, peak P2). On the other hand, when the sensor head is positioned at an area that has not been hardened 2 (Fig. 1c) and, therefore, with no hardened phase, a peak is obtained at a corresponding position of the non-hardened phase (Fig. 1d). This peak is generally a high amplitude peak and occurs in magnetic fields of less than 1 kA/m.

Thus, when a sample is not completely hardened over its entire surface, as is the case with the races (6) of certain crankshafts where up to several millimetres of the race (6) can be left non-hardened, the signal of the MBN envelope which is obtained depends on the position in which the MBN sensor is placed. When comparing the signal received when the sensor head is placed so that the area picked up by the sensor has a greater quantity of non-hardened than hardened phase (Figure 3e and 3f), the amplitude obtained from the non-hardened phase (first peak P1 at lower magnetic fields) is higher than if the sensor is placed so that the sensor picks up a higher quantity of the hardened area (Figure 3a and 3b, where the peak P1 is of a lower intensity).

The method and device of the present invention thereby allow, from the amplitude of the first peak P1, the distance from a geometric reference point of the part (for instance the wall of a counterweight 8) to the point where the hardened area 1 (Dh in Figures 1 and 2) begins to be determined quantitatively by means of non-destructive methods using the signal measured by an MBN sensor (3), placed at a certain measurement point or points (Ds in Figures 1 and 2) of the part to be measured.

Each the steps of the stages of the method of the present invention are explained below in more detail:
a) scanning a measurement area of a part;
b) processing the MBN signal obtained;
the stages being:
i) training a regression model using reference parts;
ii) measuring the part to be measured; and
based on the comparison of the result of stages i) and ii), the following is carried out:
iii) calculating the unknown distance to the hardened area (Dh) of the part to be measured.

### a) Scanning a measurement area of a part

First, a measurement area of a part is scanned by applying a variable magnetic field to the part and measuring an MBN signal (MBN envelope) at at least one measurement point (Ds) along the area to be measured by means of one or more sensors (3).

Said part can be either a reference part with a known distance to the hardened area (Dh') or a part to be measured with an unknown distance to the hardened area Dh.

To scan the part, a variable magnetic field is first applied to the area of the part that is to be measured, for instance by means of an electromagnet (5). This magnetic field must be applied to the part at least in the area to be measured, i.e. on the surface comprising the sensing area (4) picked up by the MBN sensor (3) when the latter is positioned at a distance or at a measurement point (Ds) with respect to the geometric reference of the part to be measured. Alternatively, the magnetic field can be applied to the entire part to be measured.

This geometric reference to which the measurement point Ds is measured, as well as the distance to the hardened area (Dh), can be with respect to any point on the part to be measured, for instance at a point corresponding to the non-hardened area adjacent to the hardened area.

The amplitude of the magnetic field must be high enough to suitably magnetise the non-hardened area (2) that is picked up by the MBN sensor at each measurement point Ds. This implies that it is not necessary to apply fields high enough to magnetise the hardened area (1) or to magnetise the entire part, although the measurement could also be carried out by applying these higher magnetic fields.

The excitation frequency should be high enough to make the amplitude of the MBN measurable and not so high as to couple the main magnetisation signal, with a frequency between 1 Hz and 200 Hz being suitable.

Once the area to be measured has been magnetised, there are two alternatives or measurement methods to carry out the invention according to claim 1. In this way, it is worth mentioning that the measurement of the part can be carried out in an area that does not necessarily cover the entire hardened area or the entire non-hardened area (measurement method 1) or by carrying out a single measurement of the part at a point where the received MBN signal provides both the hardened area (1) and the adjacent non-hardened area (2) (measurement method 2). This measurement is used to determine the distance to the hardened area (Dh), which is the longitudinal distance in the direction parallel to the surface of the part where the hardened area begins (1). This is not to be confused with the thickness of the hardened area or the extent of the hardened area.

These two possible methods for scanning a measurement area of a part, from step a), are summarised below:

### Method 1: Carrying out a discrete measurement scan

Using a measurement system comprising at least one MBN sensor (3), the method 1 comprises carrying out a measurement scanning at different positions of the part or measurement points (Ds) of the part, gradually changing the position Ds. These point measurements must be carried out at least at some positions where the sensor picks up information from both hardened surface areas (1) and non-hardened surface areas (2) (see Figure 3). Such measurements can also be carried out at measurement points (Ds) where the sensor picks up virtually only non-hardened material (2), or virtually only hardened material (1). However, it is not necessary for the measurements to range from a position where the sensor only picks up a non-hardened area 1 (see Figure 1c) to a position where it picks up virtually only a hardened area 2 (see Figure 1a). These measurement points (Ds), both the start and end points of the scanning as well as the intermediate measurement points, are defined as appropriate, for instance according to the part specifications.

The measurement points Ds can be different for each of the parts, or they can be the same (constant) for all the parts to be measured, i.e. for reference parts with a known Dh' as well as for parts to be measured with an unknown Dh.

As a non-limiting example, and in order not to carry out a very large number of measurements, it can be measured from when the MBN sensor (3) is in the hardened area 1 (Figure 3a) at 4 mm from the interface, or from when the sensor (3) is in the non-hardened area 2 (Figure 3e) at 4 mm from the interface (Figure 3e), until the sensor is right at the hardened area-adjacent non-hardened area interface (Figure 3c), for instance by carrying out measurements spaced 0.5 mm apart. At each of the start and end positions of the scan, as well as at the measuring positions in between (all of which are measurement points Ds), the sensor (3) obtains an MBN signal comprising an amplitude characteristic of the first peak of the MBN envelope.

As a result of this series of discrete point measurements at different measurement points Ds, the amplitude of the first peak of the MBN signal (P1, P1', P1") can be obtained and subsequently plotted with respect to the position at which they were obtained (measurement points Ds). This curve typically shows a sigmoidal shape, as shown in Figure 4 where said sigmoidal curves are plotted for three reference parts for which the distance to the hardened area (Dh1, Dh2, Dh3) was previously known before carrying out the measurement at each measurement point (Ds); said parts being used to carry out the stage for training the regression model i) that will be explained below.

Said training of the regression model will allow the calculation of the distance Dh of a sample to be measured with an unknown distance to the hardened area Dh, which will be explained in stage ii) for measuring and stage iii) for calculating Dh.

### Method 2: carrying out a point measurement at a measurement point Ds

Using a measurement system comprising at least one MBN sensor (3), this method consists of carrying out a single point measurement of the MBN signal at a single measurement point Ds of the parts, both on reference parts with known distances (Dh', Dh", etc.) and on parts to be measured with unknown Dh.

This measurement point Ds must be such that the MBN sensor (3) picks up a signal from both the surface hardened area (1) and the adjacent non surface hardened area (2), i.e. a measurement point close to the interface between the two areas, for instance by way of non-limiting example around ±0.5 mm of the interface. This ensures that an MBN signal is obtained from both phases, with sufficient sensitivity to detect the amplitude of the first peak (P1) of the MBN signal corresponding to the non-hardened phase.

Once the MBN signal has been measured at said single measurement point (Ds) for each part, the MBN signal is processed to obtain the amplitude of the first peak (P1, P1', P1", etc.) of said MBN envelope, which will allow a training model to be created by measuring reference parts with a known distance to the hardened area (Dh', Dh", etc.) (stage i for training a regression model), so that after measuring the part to be measured with an unknown Dh (stage ii of measuring), said distance Dh can be calculated (stage iii of calculating the distance to the hardened area).

Said stages i, ii and iii are analogous regardless of whether they are carried out to measure a scan at several discrete positions Ds (measurement method 1) or whether a measurement is carried out at a single measurement point Ds (measurement method 2). That is, stages i, ii and iii are analogous for both initial measurement methods 1 and 2.

In the case of measurement method 2, both for the reference parts with a known distance to the hardened area (Dh', Dh", etc.) and for the part to be measured with an unknown Dh, the chosen measurement point (Ds) where the MBN signal is measured is the same for all of them, i.e. a fixed measurement point Ds (see Figure 5, where the value of P1 is represented with respect to Dh, for a constant point Ds not represented).

With respect to the measurement system to carry out measurement methods 1 or 2, consisting of one or more MBN sensors, the sensor and the sensing conditions to be used should preferably allow there to be a sensing area 4 (i.e. area of the material from which the MBN signal is received by positioning the sensor at a measurement point Ds) such that in the longitudinal direction a width greater than the acceptance tolerance in parameter Dh is covered. That is, by way of non-limiting example, if the range of distances Dh over which the production parts are correct may vary by 2 mm, i.e., said Dh may be from 4 mm to 6 mm for instance, the length of the sensing area (4) to be picked up by the sensor in a single measurement should preferably be for instance, 2 mm ± 0.5 mm in order to obtain a higher accuracy in the calculation of Dh.

### b) Processing the MBN signal obtained

This step consists of processing the MBN signal obtained for each of the measurement points (Ds) determined. Said MBN signal may consist of two peaks P1 and P2 corresponding to the non-hardened and hardened material, respectively (see Figures 1a and 1b). The aim of this processing is to obtain the amplitude of the first peak (P1, P1', P1", etc.) of the MBN envelope, i.e. the peak corresponding to the non-hardened material. This will be done for all types of parts, both for reference parts with a known (Dh', Dh", etc.) used for training the regression model (for instance parts Dh1, Dh2 and Dh3 in Figure 4) and for parts to be measured with an unknown Dh (part represented by smaller, solid dots in Figure 4).

In other words, the first peak P1 is obtained from the MBN envelope or MBN signal which may be composed of one or several peaks corresponding to several phases (for instance a peak P1 representative of the non-hardened phase and a peak P2 representative of the hardened phase).

### i) Training a regression model using reference parts

After carrying out the measurement or spot measurement scanning at the measurement points Ds of the reference parts with a known distance to the hardened area (Dh', Dh", etc.) that are different from each other, the amplitude values of the first peak of the MBN envelope (P1', P1", etc.) of each of the measurements carried out are determined in dependence of the distance or measurement point Ds where the sensor was positioned during the scan, both for the initial and final measurement points, as well as the intermediate ones.

The training of the regression model therefore comprises carrying out the previous steps a) and b) on a plurality of reference parts with a known distance to the hardened area (Dh', Dh", etc.) to obtain the amplitude of the first peak (P1', P1", etc.) for each of the measurement points (Ds).

For the training of the regression model, said amplitude values (P1', P1", etc.) obtained for the reference parts with a known (Dh', Dh", etc.) different for each reference part, can be plotted in dependence of the measurement points (Ds) of the sensor (3) at which the measurements were carried out (see Figure 4), both for the reference parts with known Dh (Dh1, Dh2 and Dh3 in Figure 4) and for the sample with unknown Dh once the measurement of the part to be measured has been carried out after training the regression model (Dh in Figure 4 for the part to be measured).

Each of the reference parts will have different known Dh values, preferably Dh values significantly different from each other, to thus be able to carry out the regression model training for that particular known Dh value for each reference part (Dh1, Dh2, Dh3 in Figure 4) in dependence of the amplitude value P1 obtained at each measurement point Ds. The known Dh values to be selected for the reference parts are preferably values that comprise and are estimated close to the unknown Dh values of the parts to be measured, so that the training of the regression model allows a more accurate calculation of the unknown Dh values of the parts to be measured.

In summary, it is understood that in stage i) for training a regression model the known distance (Dh', Dh", etc.) is different for each of the reference parts used for training the regression model, and that the measured measurement points (Ds) can either be different for each reference part, or be the same for all reference parts with a known distance (Dh', Dh", etc.), so that for each sample with a known distance (Dh), an amplitude of the peak (P1', P1", etc.) is obtained for each measurement point (Ds) of the area to be measured.

From the values at which the amplitude of the first peak (P1', P1", etc.) is known in dependence of Ds and (Dh', Dh", etc.) for reference parts, a regression model can be created using machine learning algorithms, such as supervised learning models like SVM (support vector machine) or KNN (K-nearest neighbour), which allow the distance at which the untreated area begins to be determined quantitatively. In the simplest cases, a model based on a first-degree polynomial can be used, and in other cases machine learning models such as SVM or KNN, among others, can be used.

The measurement of the reference parts, and the subsequent training of the regression model, is sufficient to be carried out only once for each set of reference parts, since the MBN signal is stable to external factors such as temperature or humidity. In fact, once the regression model has been trained, it does not need to be recalibrated if said external factors such as temperature or humidity change.

The result of stage i) for training a regression model after measuring reference parts with a known (Dh', Dh", etc.) that are different with measurement method 1, in which different fixed measurement points (Ds) are used, will be a sigmoidal curve for each of said reference parts (see Figure 4), which can be trained using machine learning algorithms, such as supervised learning models like SVM (support vector machine), which will make it possible to generate regression models which will make it possible, once the value of P1 of the part to be measured is known, to calculate its unknown distance to the hardened area (Dh) from the regression model.

Analogously, the result of stage i) for training a regression model for said reference parts measured at a single fixed measurement point (Ds) will be a function (for instance a linear relationship, see Figure 5) that allows its unknown Dh value to be calculated by means of regression from the trained model, for instance a first-order or higher order polynomial.

### ii) Measuring the part to be measured

Stage ii) for measuring the part to be measured comprises carrying out the previous steps a) and b) for the part to be measured with a hardened area (1) at an unknown distance (Dh) to obtain the amplitude of the first peak (P1) for each of the measurement points (Ds);

This will allow the unknown distance to the hardened area (Dh) of the parts to be measured to be calculated using the amplitude of the first peak (P1) of the MBN envelope measured in said parts to be measured, provided that the distance from the sensor to the reference point (Ds) is maintained.

Said measurement points Ds, to be measured with at least one MBN sensor (3), according to measurement method 1 correspond to a scanning of measurement points (Ds) between an initial and a final measurement point, which may be the same or different for each part, each part being understood to be the part to be measured or each reference part from which the above regression model has been obtained. According to measurement method 2, a single measurement point (Ds) will be used, which will be the same as for the reference parts.

Preferably, the scanning of the part will comprise the minimum possible number of measurement points (Ds) and the minimum distance scanned on the part to be measured, allowing the distance to the hardened area (Dh) to be determined. In the case of measurement method 1, this would involve scanning a small area such that some measurement point (Ds) comprises an MBN signal from both the hardened area (1) and the adjacent non-hardened area (2). In the case of measurement method 2, a single measurement would be carried out at one measurement point (Ds) comprising a signal from both areas.

The method of the present invention contemplates measuring the amplitude of the first peak (P1) of the envelope of the MBN signal measured at the measurement point or points Ds, when the envelope of the MBN signal has two peaks, or measuring the amplitude of the peak P1 directly when the envelope of the MBN signal has only one peak P1. Measurement of the MBN envelope and the amplitude of one of its peaks, for instance the amplitude of the first peak P1, are methods known in the prior art.

By way of non-limiting example, the part to be measured may for instance be a crankshaft, in particular a crankshaft cylinder, such as crankshaft journals and bearings.

### iii) Calculating the unknown distance to the hardened area (Dh) of the part to be measured:

Once the regression model has been obtained using reference parts in stage i), and the amplitudes of the first peak (P1) of the MBN signal or signals at the measurement points (Ds) of the part to be measured have been obtained, the unknown distance to the hardened area (Dh) of the part to be measured can be calculated by applying as input parameters of the regression model the amplitudes of the first peak (P1) obtained for the part to be measured.

In other words, the Dh of the part to be measured is calculated by applying the regression model trained with the amplitudes of the first peak of the part to be measured (P1). The output of said model will be directly the unknown Dh value of the part to be measured.

In the simplest cases, a model based on a first-degree polynomial can be used, and in other cases machine learning models such as SVM or KNN, among others, can be used.

In the particular case of measurement method 2, where both stage i) for training a regression model using reference parts and stage ii) for measuring the part to be measured are carried out for a single measurement point Ds, which is the same for all parts (both reference parts and the part to be measured), the calculation of Dh can be carried out by applying as an input parameter of the regression model the amplitude of the first peak P1 of the part to be measured. In other words, in this case the unknown Dh value of the part to be measured is obtained by applying as an input parameter of the regression model the amplitude of peak P1, which is a particular case of the regression model used for the calculation of the unknown Dh from measurement method 1.

In summary, it is understood that in this stage iii), the calculation of Dh is carried out by inputting in the regression models obtained in stage i) for training a regression model the results of stage ii) for measuring said part with an unknown Dh.

### Measurement system to carry out the method of the invention:

To carry out the method of the invention and to calculate the distance to the hardened area (Dh) both in reference parts with a known (Dh', Dh", etc.) and in parts to be measured with an unknown Dh, which contain a non-hardened part (2) together with a hardened part (1), such as crankshaft bearings and journals, a configuration or measurement system can be used, said configuration or measurement system comprising:
- a magnetising element (5) to apply a variable magnetic field to the part, where said magnetising element may be, for instance, an electromagnet (5), such as a surface magnetising electromagnet, which applies said magnetisation tangentially or radially;
- a sensor (3) to detect the resulting MBN signal on the surface of the part, where said MBN sensor may be composed of an inductor/pick up coil and may be placed on the surface of the part; and
- a processing unit to obtain the resulting MBN signal at the measurement point (Ds) where the sensor (3) is placed, where said processing unit may be incorporated in the sensor (3) itself, or it may be a separate processing unit to which the signal obtained by the sensor (3) is sent.

Therefore, the measurement system according to the invention is able to detect and process the resulting MBN signal on the magnetised surface of the part.

By way of non-limiting example, said electromagnet (5) comprises a ferromagnetic core 5.1 and a coil 5.2 (see Figure 2a and 2b by way of non-limiting example) which allows the entire measurement area over which the scanning is carried out, or even the entire part to be measured, to be magnetised.

As an example, if the part to be measured is a crankshaft cylinder, the width of the magnet or electromagnet (5) may be smaller than the distance between the walls of the counterweights (8) of the crankshaft, typically the length of the race (6) of the crankshaft (see Figure 2a and 2b). The poles of such a ferromagnetic core (5.1) may be flat, convex or concave. Said electromagnet (5) may also comprise one or more excitation coils (5.2) which allow sufficient magnetic field to be generated in the measurement area where the scanning is carried out and from where the MBN sensors pick up the MBN signal.

The signal induced in the coil (5.2) can be amplified by any means of signal amplification known in the prior art.

The signal induced in the coil (5.2) can also be filtered by any type of filter, for instance, a band-pass filter (or by a low-pass filter followed by a high-pass filter or vice versa) in an analogue manner (by electronic means) or in a digital manner (by computer), or by a combination of both.

The envelope of the MBN signal can be calculated according to any method known in the prior art, for instance by means of a moving root mean square as a non-limiting example.

The electromagnet (5) and the sensor (3) may form a single mechanically integral device in the form of a single sensor head, or they could be mechanically separate parts.

The diameter of the MBN sensor (3) can vary for instance from 0.5 mm to 10 mm, and the analysis frequency range can vary for instance from 1 to 500 kHz.

Preferably, the combination of the diameter of the MBN sensor (3) and analysis frequency range is chosen so that the MBN signal meets the following characteristics:
- In the case of measurement with the sensor positioned at a single measurement point Ds (measurement method 2), the MBN signal received must comply with the fact that at a specific position, the radius (Rs) of the sensing area (4) from which information is obtained on the surface of the part contemplates both the hardened area (1) and the non-hardened area (2), for the entire range of distance Dh admissible by manufacturing tolerances in each application (see Figure 3). Therefore, the position and characteristics of the sensor (3), such as the diameter of the MBN sensor (3) or the analysis frequency, must be determined empirically in each case. By way of non-limiting example, in a case where the acceptable range of Dh is ± 0.5 mm, i.e., having an acceptable variation of this distance Dh of 1 mm, for instance, from 2 mm to 3 mm, the signal picked up by the MBN sensor (3) due to the combination of the diameter of the sensor and the frequency range should have a radius Rs greater than 1 mm.
- In the case of carrying out measurements with the sensor placed in different positions (measurement method 1), it is possible to have a sensing area (4) for which the radius of the sensing area Rs is smaller than the acceptable range Dh, provided that between all the measurements, the sensing area covers the acceptable range.

Optionally, the measurement system may include positioning means for positioning the MBN sensor (3) which allow it to be placed in different positions Ds or in a fixed position Ds, with respect to the position defined as the reference position. Non-limiting examples of such positioning means would be a movable platform or a robotic arm configured to move the sensor (3). This allows a measurement scan to be carried out by varying the distance or measurement point (Ds) with respect to the reference position, and a measurement can be carried out for each measurement point (Ds).

Optionally, the measurement system may include a support device, or any type of means configured to ensure that the MBN sensor (3) and/or the magnetising element (5) are positioned and maintained at a specific distance corresponding to the measurement point (Ds) where the sensor (3) picks up the MBN signal, so that said distance Ds remains stable and does not change accidentally.

Optionally, the measurement system may include a system for measuring distances on the part, in order to know the exact position of the reference point and/or the measurement point (Ds), and thus prevent the dimensional tolerance of the part from affecting the exact positioning of the MBN sensor (3).

Optionally, the measurement system may comprise a plurality of magnetic elements (5) and/or sensors (3), for instance two or more MBN sensors (3), to carry out several simultaneous scans or measurements of the MBN signal on the part, or to measure both interfaces between the hardened area (1) and the adjacent non-hardened area (2) simultaneously.

By way of non-limiting example, when two MBN sensors (3) are used, the electromagnet (5) and the sensors (3) are part of the same device, the two MBN sensors (3) may be placed halfway between the poles of the electromagnet (5), and symmetrically with respect to the width of the electromagnet (5), as seen in Figure 2a. When this particular measurement system is further used to measure the hardened area (1) of the race (6) of a crankshaft cylinder, as opposed to the non-hardened area (2) of the race (6) and the grooves (7) of the crankshaft cylinder, the two MBN sensors (3) can be placed at a distance or measurement point (Ds) with respect to the walls of the counterweights (8) of the crankshaft cylinder Ds (Figure 2a), such that the two MBN sensors (3) pick up the differences in the distance to the hardened area (Dh) at the beginning of the treated area from the wall of the counterweight (8 in Figure 2a). Therefore, the race (6) of the crankshaft cylinder Figure 2a consists of both a hardened area (1) and the non-hardened areas (2) adjacent to the hardened area (1). The race (6) does not include the grooves (7).

In fact, a configuration of two MBN sensors (3) is interesting to measure, in crankshaft cylinders, consisting of a hardened race (6) (1) and non-hardened grooves (7), the two distances to the hardened area Dh with respect to the corresponding adjacent non-hardened areas (2), which in the case of this crankshaft cylinder consists of the distance of the hardened area (1) of the race (6) to the non-hardened area (2) of the race (6) and the two grooves (7) (see Figure 2a). For this case, knowing the two distances to the hardened area Dh, the measurement system of the invention could determine the length of said hardened area (1) of the race (6).

In summary, the novel method of the invention, which allows the measurement of the distance to the hardened area (Dh) by means of the magnetic Barkhausen (MBN) emission signal, provides the following advantages for calculating Dh:
- It is a quick method.
- It is a non-destructive method that does not require prior preparation of the part.
- The calculation of Dh is highly accurate, for instance, a resolution of up to 70 µm, without the need for the distance between contiguous measurements with the MBN sensor (3) to be less than the resolution to be obtained.
- It does not require relative motion between the part to be measured (for instance, crankshaft cylinder) and the sensor (3) for measuring the MBN signal, and can acquire measurements in both static and relative motion, even with uncontrolled variable speed motion.
- Said distance to the hardened area (Dh) can be calculated from a single measurement at a single measurement point (Ds) of the part to be measured by means of an MBN sensor (3) receiving an MBN signal from both the hardened area (1) and the non-hardened area (2).
- It is not necessary to scan the entire non-hardened area (2). In fact, the sensor does not have to physically enter the non-hardened area (2), and receiving information from the non-hardened area (2) closest or adjacent to the hardened area (1) is sufficient to calculate Dh.
- It is not necessary to carry out a continuous scan, it being sufficient to carry out measurements with the sensor (3) placed at a single measurement point (Ds) or at different measurement points with one or more measurement points close to the interface between the hardened area (1) and the adjacent non-hardened area (2).

Finally, it should be taken into account that this document describes only some embodiments of the invention, so that the person skilled in the art will understand that other equivalent or alternative embodiments of the invention, as well as their obvious and equivalent modifications, are also possible. The scope of the aspects of the invention should therefore not be limited to the specific embodiments specifically described.

## Claims

1. A method for the non-destructive measurement of the distance to the hardened area (Dh) where the end of a hardened area (1) of a part to be measured is located, said method comprising:
a) scanning a measurement area of a part by applying a variable magnetic field to the part and measuring an MBN signal at at least one measurement point (Ds) along the measurement area by means of a sensor (3);
b) processing the MBN signal obtained for each of the measurement points (Ds) determined to obtain the amplitude of the first peak (P1, P1', P1") of the MBN envelope;
such that it comprises:
i) training a regression model by using reference parts, which comprises carrying out the previous steps a) and b) applied to a plurality of reference parts with a known distance to the hardened area (Dh', Dh") to obtain the amplitude of the first peak (P1', P1") for each of the measurement points (Ds);
ii) measuring the part to be measured, which comprises carrying out the previous steps a) and b) applied to the part to be measured with a hardened area at an unknown distance to the hardened area (Dh) to obtain the amplitude of the first peak (P1) for each of the measurement points (Ds);
iii) calculating the distance to the hardened area (Dh) of the part to be measured by applying the trained regression model to the amplitude of the first peak of the part to be measured (P1).

2. The method for the non-destructive measurement of the distance to the hardened area (Dh) according to claim 1, wherein the measurement area of the reference parts and the part to be measured is a single measurement point (Ds).

3. The method for the non-destructive measurement of the distance to the hardened area (Dh) according to claim 1 or 2, wherein more than one sensor (3) is used to simultaneously measure the measurement area of the reference parts and/or the part to be measured.

4. The method for the non-destructive measurement of the distance to the hardened area (Dh) according to claims 1 to 3, wherein the part to be measured is a crankshaft.

5. A measurement system to carry out the method according to claims 1 to 4, said system comprising:
- a magnetising element (5) to apply a variable magnetic field to the part;
- a sensor (3) to detect the resulting MBN signal on the surface of the part; and
- a processing unit to obtain the resulting MBN signal at the measurement point (Ds) where the sensor (3) is placed.

6. The measurement system according to claim 5, further comprising positioning means for positioning the sensor (3) that allow it to be placed at different measurement points (Ds).

7. The measurement system according to claim 5 or 6, further comprising means configured to ensure that the sensor (3) and/or the magnetising element (5) are positioned and maintained at a specific distance corresponding to the measurement point (Ds) where the sensor (3) picks up the MBN signal.

8. The measurement system according to claims 5 to 7, comprising a plurality of magnetising elements (5) and/or sensors (3).
